# EUROPEAN PATENT SPECIFICATION

(11) **EP 0 380 099 B1**
(45) Date of publication and mention of the grant of the patent: **02.04.1997**
(21) Application number: 90101505.7
(22) Date of filing: 25.01.1990
(51) Int. Cl.: G06F 7/48

(54) **Register and arithmetic logic unit**
Register- und Arithmetische-Logik-Einheit
Unité de registre et arithmétique logique

(30) Priority: 27.01.1989 US 303788
(43) Date of publication of application: 01.08.1990
(73) Proprietor: Hughes Aircraft Company, Los Angeles, California 90045-0066 (US)
(72) Inventor: Davies, Steven P., Ontario, California 91871 (US); Espelien, Mark, Albuquerque, New Mexico 87111 (US)
(74) Representative: Witte, Alexander, Dr.-Ing.

(56) References cited:
- EP-A- 0 067 667
- CONFERENCE RECORD OF THE GLOBAL TELECOMMUNICATIONS CONFERENCE 1987 vol. 1, November 1987, TOKYO pages 442 - 446; H. GAMBE ET AL.: 'A 32 BIT FLOATING POINT DIGITAL SIGNAL PROCESSOR FDSP-4 AND ITS APPLICATION TO THE COMMUNICATION SYSTEMS'
- ELECTRONIC DESIGN. vol. 31, no. 16, August 1983, HASBROUCK HEIGHTS, NEW JERSEY pages 133 - 138; J.ELDON ET AL.: 'Floating-point chips carve out FFT systems'
- IEEE TRANSACTIONS ON CIRCUITS AND SYSTEMS. vol. 35, no. 5, May 1988, NEW YORK US pages 495 - 505; B.BARAZESH ET AL.: 'A VLSI Signal Processor with Complex Arithmetic Capability'
- CONFERENCE RECORD OF THE TWENTY-SECOND ASILOMAR CONFERENCE ON SIGNALS, SYSTEMS & COMPUTERS vol. 1, November 1988, PACIFIC GROVE, CALIFORNIA pages 898 - 902; N.BEDARD ET AL.: 'The Weitek 64-bit Floating-Point Datapath Unit'

## Description

The present invention generally relates to digital signal processing systems and in particular to a register and arithmetic logic unit for use in such systems that provides for a split pipeline architecture that operates on multiple data formats.

The ability to perform sophisticated vector and scalar arithmetic operations in real time is a key requirement of signal processing systems. Often, however, this requirement is also accompanied by severe physical constraints upon the size, weight, power and cooling of the signal processing system. In the past, signal processor designers have had to compromise among competing requirements, many times resulting in processors with less than adequate performance.

Conventional signal processors may also be limited in performance due to relatively slow system clock rates of around five megahertz, and limited capability to operate on 16 bit fixed point data.. The fixed point operational limitations of the such conventional signal processors has become significant in many application environments. Many signal processing algorithms require arithmetic computations having a large dynamic range, making 32 bit floating point processing necessary.

Thus, in order to support the 32 bit processing requirements of state of the art signal processors, there is a need in the art for an arithmetic and register logic unit which is capable of providing fixed and floating point computations on 16 and 32 bit data.

EP-A-0 067 667 discloses a data processing system. The system employs a fixed point arithmetic unit and a separate floating point arithmetic unit controlled by a common micro-instruction store. Each of the two arithmetic units has a separate register file the only input of which is coupled to the output of the arithmetic unit. The arithmetic units have a plurality of inputs coupled to the data outputs of the register file of the respective register files and to respective data buses.

"CONFERENCE RECORD OF THE GLOBAL TELECOMMUNICATION CONFERENCE 1987", Vol. 1, November 1987, Tokyo, pp. 442-446; H. Gambe et al.: "A 32 bit floating point digital signal processor FDSP-4 and its application to the communication systems" discloses a digital signal processor comprising an arithmetic logic unit and a register file. The register file and the arithmetic logic unit are interconnected by a central 2 x 32 bit bus. The arithmetic logic unit is divided into two sub-parts. One part serves for integer/fixed point operations and the other for floating point operations.

"ELECTRONIC DESIGN", Vol. 31, No. 16, August 1983, Hasbrouck Heights, New Jersey, pp. 133-138, J. Eldon et al: "Floating-point chips carve out FFT systems" discloses a register and arithmetic logic chip being designed for single-cycle 16-bit fixed-point and 22-bit floating-point addition and subtraction and which also performs 32-bit fixed-point arithmetic in two cycles. The chip consists of an arithmetic and logic unit and a 16-word register file as well as a bus connecting them. An input multiplexer routes the single input port to either the arithmetic and logic unit or the register file. The output of the register file is connected to the input of the arithmetic and logic unit and the output of the arithmetic and logic unit is coupled back into the input of the register file.

In view of the above, it is the object of the invention to provide an improved register and arithmetic logic unit.

This object is achieved by a register and arithmetic logic unit comprising a register file having a plurality of data inputs and a plurality of data outputs, and adapted to store a plurality of data words, arithmetic logic means having a plurality of inputs coupled to the data outputs of the register file and having a data output, for processing data words by means of two parallel arithmetic logic units which provide fixed point and floating point arithmetic processing operations, respectively, and interface logic means having a plurality of data inputs for receiving data words to be processed and coupled to the data inputs of the register file and the arithmetic logic means, for selectively transferring data words to the register file for storage therein or transferring data words to the arithmetic logic means for processing thereby.

Generally, in order to overcome some of the limitations of conventional signal processing systems, the present invention provides for a register and arithmetic logic unit which incorporates a split pipeline architecture that is capable of simultaneously operating on multiple data formats.

Each input of the plurality of data inputs of the arithmetic logic unit may be coupled to respective ones of the two parallel arithmetic logic units to permit processing of the input data. The data formats may include dual 16 bit fixed point, 32 bit fixed point, 32 bit floating point and logical data processing formats. Post-processing registers may include a limiter/shifter register, a length-select able four word first in, first out buffer that controls the length of the register pipeline, and logic which provides for queuing of the processed data words.

The register file and the fixed point arithmetic logic unit may be selectively coupled together to function as an accumulator. This function permits processing of the data words such that two 32 bit data words are accumulated into a 64 bit data word comprising two register file words, or the dual 16 bit data words are accumulated into a 32 bit data word. Processing using the dual 16 bit format employs a potential overflow scheme which permits a variety of signal processing algorithms to function with relatively compact code.

The various features and advantages of the present invention may be more readily understood with reference to the following detailed description taken in conjunction with the accompanying drawing, wherein like reference numerals designate like structural elements, and in which:
FIG. 1 is a block diagram of a signal processor incorporating the register and arithmetic logic unit of the present invention;
FIG. 2a is a detailed block diagram of the register and arithmetic logic unit of the present invention;
FIG. 2b is a detailed diagram of the fixed and floating point processor of the register and arithmetic logic unit of FIG. 2a;
FIG. 3 is a detailed diagram of the register file and fixed and floating point processor of the present invention; and
FIG. 4 is a detailed diagram of the register file of the present invention.

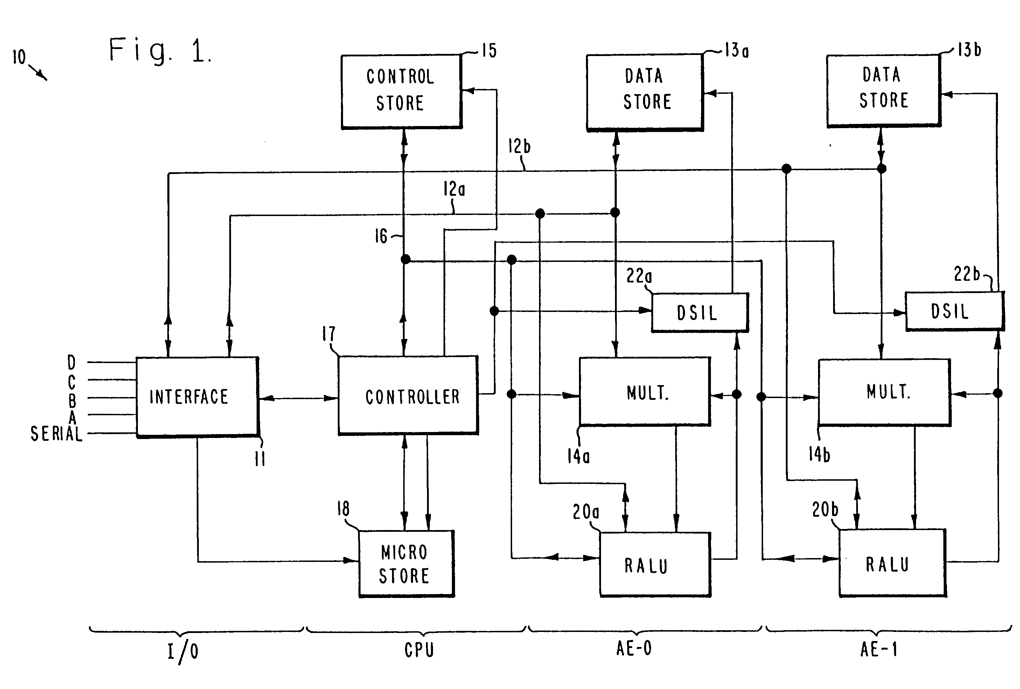

Referring to FIG. 1 shown therein is a block diagram of a signal processor 10 incorporating a register and arithmetic logic unit 20 in accordance with the principles of the present invention. The signal processor 10 will be described in general terms to provide a context for the describing the register and arithmetic logic unit 20.

The signal processor 10, shown in FIG. 1, generally comprises four main sections: an input/output section, designated as I/O, a central procession unit designated as CPU, and two arithmetic elements, designated as AE0 and AE1. The input/output section includes an external interface unit 11 which provides a plurality of configurable input/output ports. The external interface unit 11 is coupled by way of data busses 12a, 12b to two data store memories 13a, 13b, that are employed to store data, and to two multipliers 14a, 14b, and two register and arithmetic logic units 20a, 20b, which operate on the data. The data store memories 13a, 13b typically store data in a predefined packed format in order to conserve memory space, in a manner which is generally known in the art.

A control store memory 15, which is employed to store control codes, is coupled by way of a control store bus 16 to an arithmetic element controller 17, to the multipliers 14a, 14b and to two register and arithmetic logic units 20a, 20b made in accordance with the principles of the present invention. A micro store memory 18 is coupled to the arithmetic element controller 17 and is employed to store microcode instructions which are utilized by the data store memories 13a, 13b, multipliers 14a, 14b, and the register and arithmetic logic units 20a, 20b.

While the present invention is disclosed with reference to its incorporation in the above-described signal processor 10 and architecture, it is not restricted to use therewith. The present invention may be employed as a stand alone processor suitable for applications other than the above-described processor.

The processor 10 generally functions as follows. Signals to be processed by the processor 10 are received by way of the external interface unit 11 and stored in the data store memories 13a, 13b. Microcode instructions defining the processing parameters of the arithmetic elements of the processor and what steps are to be performed by the arithmetic elements, AE0, AE1, are stored in the micro store memory 18. The application program consisting of pointers to microcode instructions, programmable coefficients to be used by the arithmetic elements during computations, and intermediate data processing results from the arithmetic elements are stored in the control store memory 15. The arithmetic element controller 17 executes application programs which cause the microcode instructions to be executed and the data to be processed. The arithmetic elements AE0, AE1, operate as parallel pipeline processors, to process the data in accordance with the microcode instructions, under control of the arithmetic element controller, and in a conventionally understood manner.

Control parameters are passed from the control store memory 15 to the multipliers 14a, 14b and the register and arithmetic logic units 20a, 20b, and the data from the data store memories 13a, 13b are processed by the arithmetic elements AE0 and AE1, under control of the arithmetic element controller 17 in a conventionally understood manner.

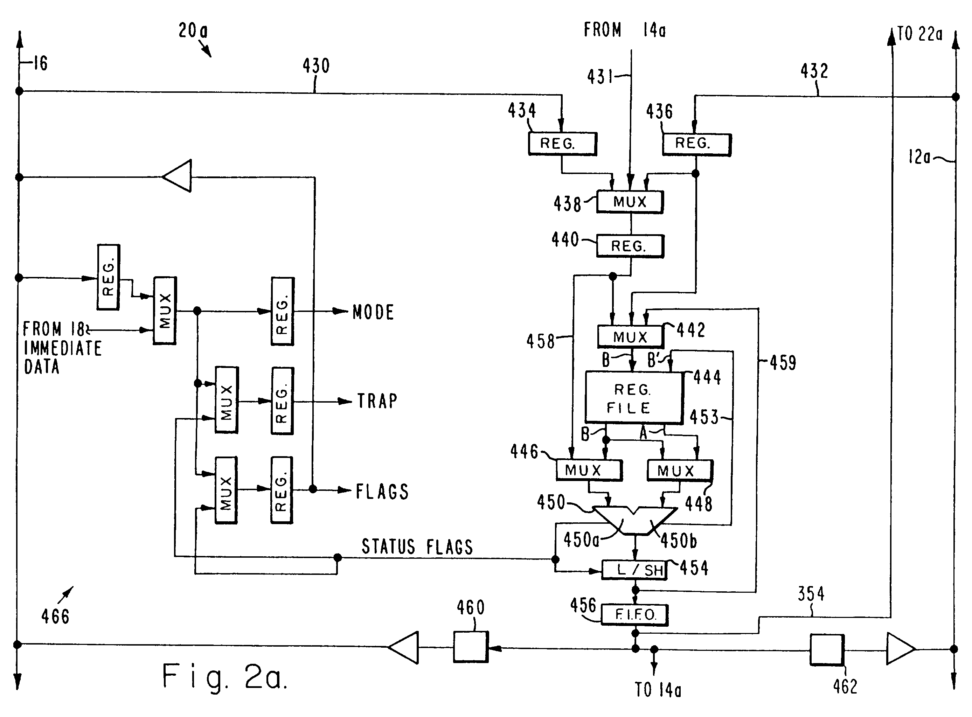

A detailed data flow diagram of the register and arithmetic logic unit 20a of the present invention is shown in FIG. 2a. Shown therein are a plurality of data input lines to the register and arithmetic logic unit 20a comprising a control store input line 430, a multiplier input line 431 and a data store input line 432. The control store and data store input lines 430, 432 are separately coupled through control and data unpacking logic 434, 436 to a first three-input multiplexer 438. The first multiplexer 438 is coupled by way of a first register 440 to a second three-input multiplexer 442.

The second multiplexer 442 is coupled to a 32 bit by 32 word register file 444 which has two outputs A, B, that are coupled to two two-input multiplexers 446, 448, as shown. The first register 440 is also coupled to the first two input-multiplexer 446 by way of bypass path 458. The two input multiplexers 446, 448 are coupled to an arithmetic logic unit 450 which incorporates two parallel arithmetic logic units 450a, 450b that provide fixed point and floating point arithmetic processing operations, respectively.

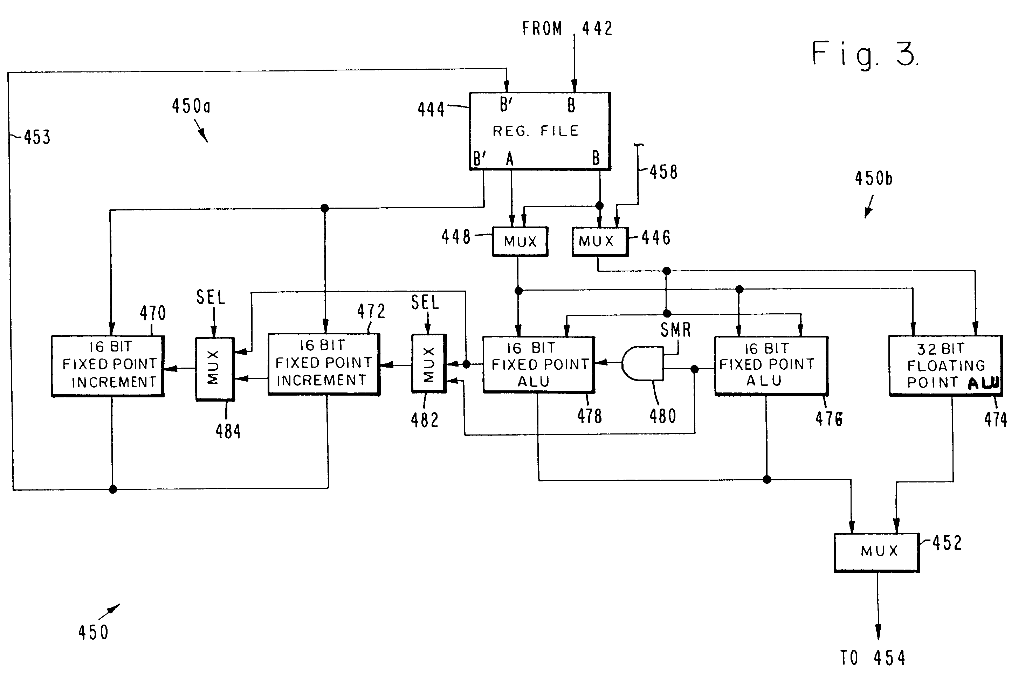

The arithmetic logic unit 450 is coupled by way of a third two-input multiplexer 452 to limiter/shifter logic 454 and then to a four word first in, first out (FIFO) buffer 456. A first feedback loop 453 is provided between the arithmetic logic unit 450 and the register file 444, which loop is shown in more detail in FIG. 3. A second feedback loop 459 is provided from a point between the limiter/shifter logic 454 and the FIFO buffer 456 to the second three-input multiplexer to control the signal flow through the arithmetic logic unit 20a. The first in, first out buffer is coupled to respective control store and data store memories 15, 13 by way of respective buffered packing logic units 460, 462, and to the multiplier 14a and the data store interface logic (DSIL) 22 shown in FIG. 1.

Control and timing logic 466 is provided which interfaces between the arithmetic logic unit 450 and the arithmetic element controller 17. This control and timing logic 466 provides status flags, conditional flags and other information to the controller as is identified in FIG. 2a. The control and timing logic 466 and its interconnection are clearly shown in FIG. 2a and will not be discussed in detail herein.

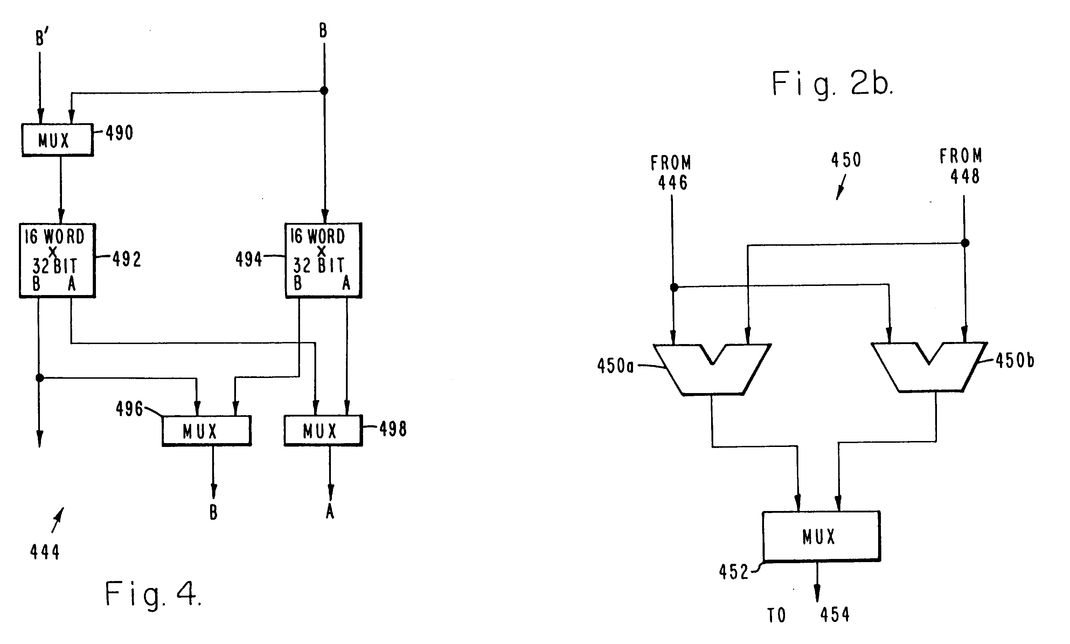

FIG. 2b shows a more detailed diagram of the fixed and floating point processor 450 shown in FIG. 2a. FIG. 2b shows that the processor 450 is comprised of two individual processors, namely the fixed point processor 450a and the floating point processor 450b. The two individual processors 450a, 450b are shown having their outputs coupled to the third two-input multiplexer 452.

With reference to FIG. 3 it shows a more detailed diagram of the register file 444 and fixed and floating point processor 450 of the present invention. The fixed and floating point processor 450 comprises two 16 bit fixed point incrementers 470, 472 which receive output B' from the register file 444. Outputs of the two 16 bit fixed point incrementers 470, 472 are coupled together and provide a feedback path to the register file 444.

The output of the first two-input multiplexer 446 is coupled to one input of a 32 bit floating point arithmetic unit 474 and respective first inputs of two 16 bit fixed point arithmetic logic units 476, 478. The output of the second two-input multiplexer 446 is coupled to the second input of the 32 bit floating point arithmetic unit 474 and respective second inputs of the 16 bit fixed point arithmetic logic units 476, 478. An AND gate 480 and third and fourth two-input multiplexers 482, 484 interconnect the 16 bit fixed point arithmetic logic units 476, 478 and the two 16 it fixed point incrementers 470, 472 as shown.

Outputs of the two 16 bit fixed point arithmetic logic units 476, 478 are coupled to one input of the two-input multiplexer 452, while the output of the 32 bit floating point arithmetic unit 474 is coupled to the second input of the two-input multiplexer 452.

FIG. 4 shows a detailed diagram of the register file 444. The register file 444 includes an input multiplexer 490 which receives data inputs B and B', and two 16 word by 32 bit registers 492, 494. Outputs A and B of the two registers 492, 494 are coupled to each of the output multiplexers 496, 498 which combine the respective A and B data to form complete A and B words, while the B output of the first register file 444 provides the B' output.

No control lines or logic have been shown in the drawing for either the signal processor 10, or for the register and arithmetic logic unit 20 of the present invention. However, Table 1 below shows a 64 bit word having opcode mnemonics identified therein wherein the first 28 bits, identified as bits 0-27, are employed by the register and arithmetic logic unit 20 of FIG. 2. The bits identified in Table 1 as RALU are associated with the register and arithmetic logic unit 20. These opcodes are referred to in Tables 2 and 3 below, which provide a description of the microcode instruction set utilized to implement the control logic for the register and arithmetic logic unit 20 of the present invention.

**Table 1.**

| **Word Partitioning** | | | |
|---|---|---|---|
| **Unit** | **Bits** | **Field** | **Comment** |
| Address Gen. | 63-57 | AOP | |
| | 56-53 | OP1 | Data/Offset |
| | 52-49 | OP2 | Data/Offset |
| | 48-46 | CR | |
| | 45-43 | DR | |
| Memory | 42-39 | CS | |
| | 38-36 | DS | |
| Multiplier | 35-34 | A | Status/Mode Register (SMR) |
| | 33-31 | B | SMR |
| | 30-28 | MOP | SMR |
| RALU | 27-26 | I | SMR |
| | 25 | FLG | SMR |
| | 24-21 | MD | SMR |
| | 20-15 | RPO | SMR |
| | 14-10 | A | SMR |
| | 9-5 | B | SMR |
| | 4 | S | SMR |
| | 3-2 | DE | |
| | 1,0 | FI,FO | Reserved |

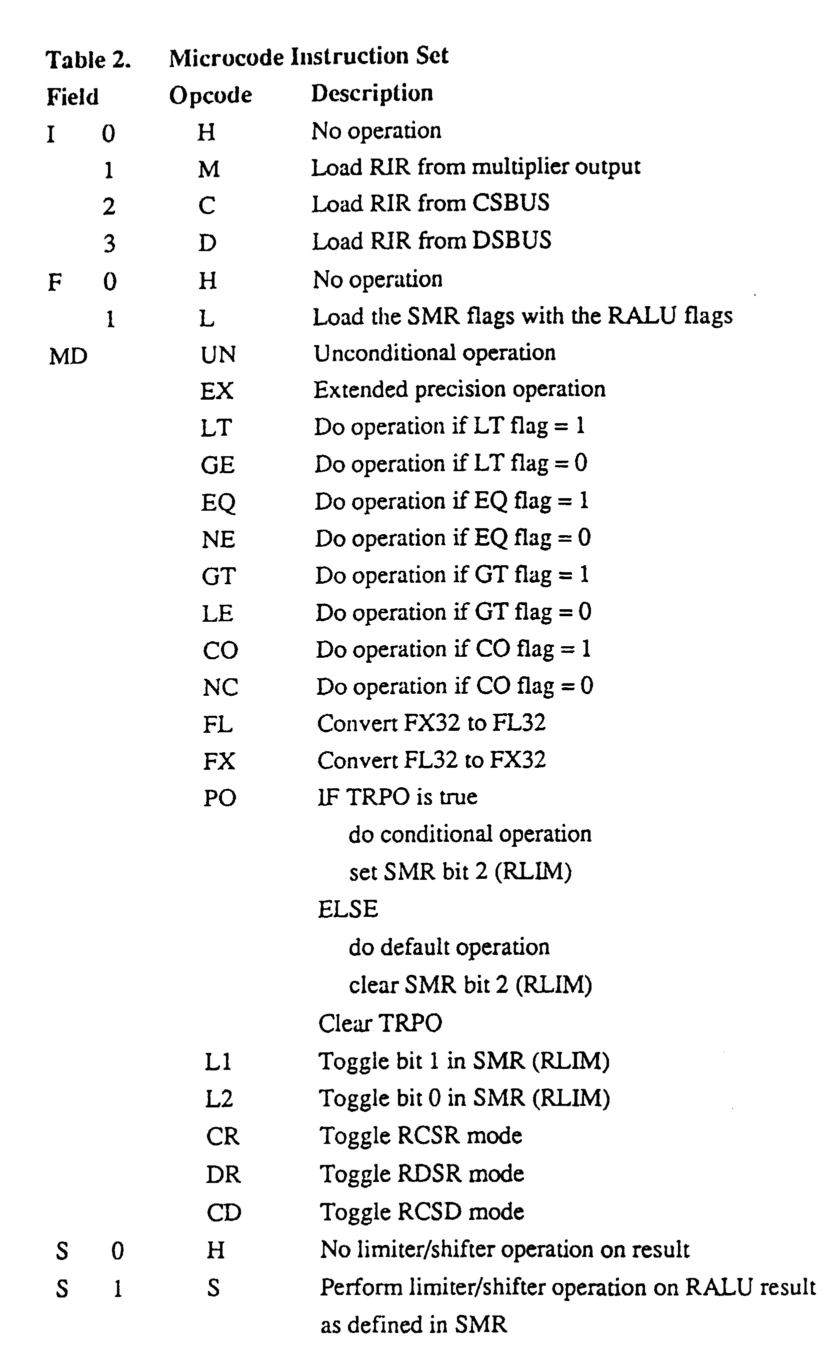

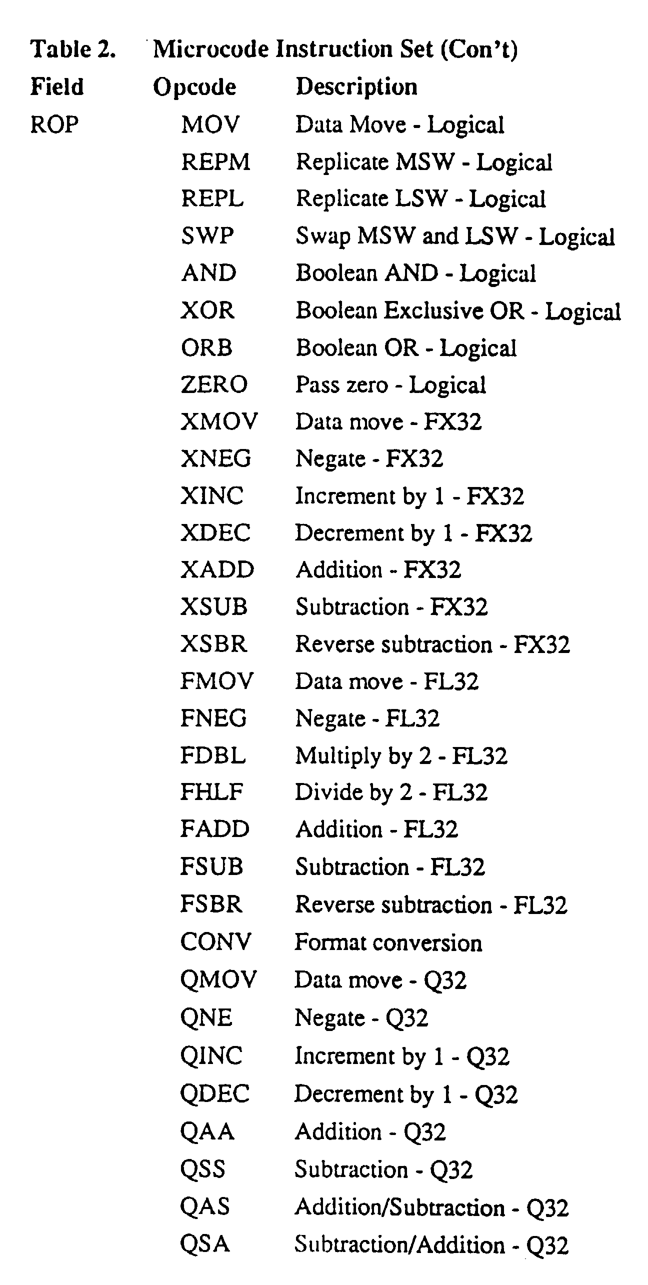

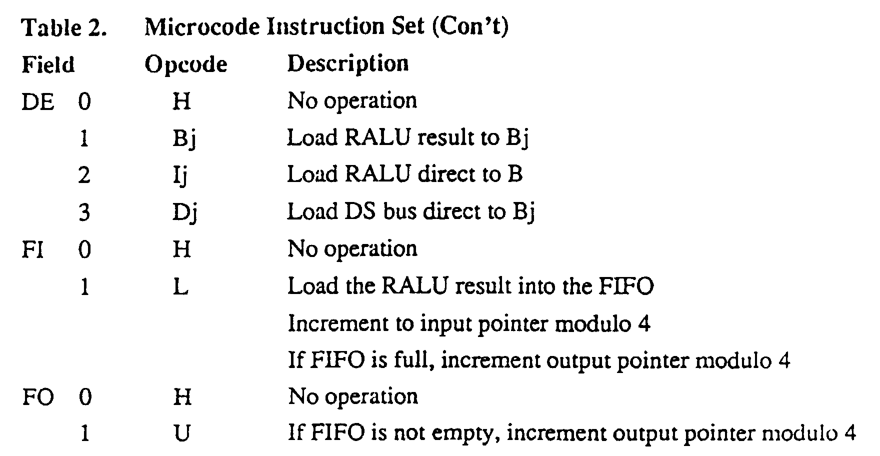

**Table 3.**

| **Status-Mode Register** | | |
|---|---|---|
| **SMR Bit** | **Name** | **Description** |
| 23 | TRPO | Trap: RALU potential overflow |
| 22 | TRIR | Trap: RALU inexact result |
| 21 | TROF | Trap: RALU overflow |
| 20 | TRIO | Trap: RALU invalid operation |
| 19 | TRUF | Trap: RALU underflow |
| 18 | ..... | Spare bit |
| 17 | RLTM | Flag: RALU Less than zero, MSW |
| 16 | REQM | Flag: RALU Equal to zero, MSW |
| 15 | RGTM | Flag: RALU Greater than zero, MSW |
| 14 | RCOM | Flag: RALU Carry/Overflow/Nan, MSW |
| 13 | RLTL | Flag: RALU Less than zero, LSW |
| 12 | REQL | Flag: RALU Equal to zero, LSW |
| 11 | RGTL | Flag: RALU Greater than zero, LSW |
| 10 | RCOL | Flag: RALU Carry/Overflow/Nan, LSW |
| 9-8 | RRND | Mode: RALU rounding |
| 7 | ..... | Spare bit |
| 6 | RRND | Mode RALU CS delay |
| 5 | RCSR | Mode RALU CS short-word read |
| 4 | RDSR | Mode RALU DS short-word read |
| 3 | RIDX | Mode RALU external index enable |
| 2-0 | RLIM | Mode RALU limiter/shifter |

From the information provided in Tables 1, 2 and 3, one skilled in the art of signal processor design can manually, or by means of commercially available software, such as software available from The CAD Group of Soquel, California, produce the timing and control logic which implements the register and arithmetic logic unit 20 of the present invention. This control logic, along with the data flow description provided herein, and its description of operation, is sufficient to permit one skilled in the art to construct the present invention.

The register and arithmetic logic unit 20a operates as follows. An applications program is loaded into the control store memory 15 and data to be processed is stored in the data store memory 13a. Microcode instructions are stored in the micro store memory 18 while control parameters are stored in the control store memory 15. Under control of the applications program, and in accordance with the microcode instructions from the micro store memory 18, control and data signals are coupled to respective portions of each of the arithmetic elements, AE0, AE1, for processing.

With reference to the arithmetic and register logic unit 20a, it receives signals along control store and data store busses 16, 12a and from the multiplier 14a, and sequentially loads the data into the register file 444 for storage. The fixed point and floating point logic units 450a, 450b of the arithmetic logic unit 450 operate in parallel as split pipeline processor to operate on the data stored in the register file 444.

The arithmetic logic unit 20a operates on data having four distinct types of data formats. These formats include dual 16 bit fixed point, 32 bit fixed point, 32 bit floating point and logical data processing formats. By appropriate coding of the applications program, selected ones of the four data formats may be processed at one time the arithmetic elements, and each arithmetic element can perform similar processing on different data at the same time. In addition, by bypassing the register file 444, and passing data directly to the arithmetic logic unit 450 allows two operands to be brought into the register and arithmetic logic unit 10 at one time, one through the register file 444, and the other over the bypass path 453.

FIG. 3 shows the details of the structure which provides for operation on data having the four different data formats. The multiplexers 446, 448 select a 32 bit carry path or 64 bit carry path for dual 16 bit fixed point or 32 bit fixed point operations, respectively. The gate 480 prevents carry into the first 16 bit fixed point arithmetic logic unit 498 which processes the most significant word, when operating in the dual 16 bit fixed point mode.

The register file 444 and the fixed point arithmetic logic unit 450a may also be selectively linked to operate as an accumulator. This permits processing of data words such that two 32 bit data words are accumulated into a 64 bit data word comprising two register file words, or dual 16 bit data words are accumulated into two 32 bit data words.

The dual 16 bit format employs a potential overflow scheme which permits a variety of signal processing algorithms to function with relatively compact code. In this scheme the two halves of the dual 16 bit format are treated as the real and imaginary portions of a complex value. With each portion representing a fractional value, a potential overflow is signaled if the complex magnitude of the value would be greater than 0.5.

At the end of a vector operation, that is, an operation on an array of complex values, the potential overflow flag may be examined and used to set the mode of the limiter/shifter. If a potential overflow has been signaled then the limiter/shifter mode should be set to divide all the vector elements by two(an arithmetic right shift) on the next vector operation, thereby preventing any overflow conditions. If a block exponent is incremented each time the potential overflow flag is checked, the potential overflow flag can then be used to implement a very efficient from of block floating point.

Thus there has been described a new and improved register and arithmetic logic unit that provides for a split pipeline architecture that operates on multiple data formats. These formats include dual 16 bit fixed point, 32 bit fixed point, 32 bit floating point and logical data processing formats. Post-processing registers including a limiter/shifter register and a length-selectable FIFO buffer which control the length of the pipeline, and logic which provides for queuing of the processed data words.

## Claims

1. A register and arithmetic logic unit comprising
- a register file (444) having a plurality of data inputs and a plurality of data outputs, and adapted to store a plurality of data words,
- arithmetic logic means (450) having a plurality of inputs coupled to the data outputs of the register file (444) and having a data output, for processing data words by means of two parallel arithmetic logic units (450a, 450b) which provide fixed point and floating point arithmetic processing operations, respectively; and
- interface logic means having a plurality of data inputs (430, 431, 432) for receiving data words to be processed and coupled to the data inputs of the register file (444) and the arithmetic logic means (450), for selectively transferring data words to the register file (444) for storage therein or transferring data words to the arithmetic logic means (450) for processing thereby.

2. The register and arithmetic logic unit of claim 1, characterized by:
- post-processing means comprising a limiter/shifter logic circuit (454) coupled to the data output of the arithmetic logic means (450) for providing limiting and scaling of the data words processed by the two parallel arithmetic logic units (450a, 450b).

3. The register and arithmetic logic unit of claim 2, wherein the post-processing means is characterized by:
- a first-in, first-out buffer (456) serially coupled to the limiter/shifter logic circuit (454) for controlling the length of the pipeline of the register and arithmetic logic unit (20a) and for providing queuing of the processed data words.

4. The register and arithmetic logic unit of any of claims 1 - 3, characterized by:
- a limiter/shifter logic circuit (454) coupled to the data output of the arithmetic logic means (450) and having an output coupled to an input of the register file means (444); and
- a first-in, first-out buffer (456) having an input coupled to the output of the limiter/shifter logic circuit (454) and having an output comprising the output of the register and arithmetic logic unit (20a);
- wherein the limiter/shifter logic circuit (454) and the first-in, first-out buffer (456) provide for limiting and scaling of the data words processed by the arithmetic logic means (450) and queuing of the processed data words.

5. The register and arithmetic logic unit of any of claims 1 - 4, characterized by each input of the plurality of data inputs of the arithmetic logic means (20a) being coupled to respective ones of the two parallel arithmetic logic units (450a, 450b) to permit processing of a plurality of predetermined data processing formats.

6. The register and arithmetic logic units of any of claims 1 - 5, characterized by the register file (444) and the fixed point arithmetic logic unit (450a) being selectively configured as an accumulator.

7. The register and arithmetic logic unit of any of claims 1 - 6, characterized by the two parallel arithmetic logic units (450a, 450b) providing for processsing of the data in dual 16 bit fixed point, 32 bit fixed point, 32 bit floating point and logical processing formats.

8. The register and arithmetic logic unit of any of claims 1 - 7, characterized by the register file (444) and the fixed point arithmetic logic (450a) unit being configured as an accumulator to provide for processing of the data words such that a 32 bit data word is accumulated into a 64 bit data word comprising two register file words or the dual 16 bit words are accumulated into two 32 bit data words.

## Patentansprüche

1. Register- und Arithmetik-Logikeinheit, mit
- einer Registerdatei (444) mit einer Vielzahl von Dateneingängen und einer Vielzahl von Datenausgängen, wobei die Registerdatei (444) dazu ausgelegt ist, eine Vielzahl von Datenworten zu speichern;
- Arithmetik-Logikmitteln (450), die eine Vielzahl von Eingängen aufweisen, die mit den Datenausgängen der Registerdatei (444) gekoppelt sind, und die einen Datenausgang haben, zur Verarbeitung von Datenworten mittels zweier paralleler Arithmetik-Logikeinheiten (450a, 450b), die die Verarbeitung von Festkomma-bzw. Gleitkommaoperationen liefern; und
- Schnittstellen-Logikmitteln, die eine Vielzahl von Dateneingängen (430, 431, 432) aufweisen, die zum Entgegennehmen von zu verarbeitenden Datenworten ausgelegt und mit den Dateneingängen der Registerdatei (444) und der Arithmetik-Logikmittel (450) gekoppelt sind, zum selektiven Übertragen von Datenworten zur Speicherung in die Registerdatei (444) oder zum Übertragen von Datenworten zur Verarbeitung zu den Arithmetik-Logikmitteln (450).

2. Register- und Arithmetik-Logikeinheit nach Anspruch 1, gekennzeichnet durch:
- Nachverarbeitungsmittel mit einer Begrenzer/Schiebe-Logikschaltung (454), die mit dem Datenausgang der Arithmetik-Logikmittel (450) zum Bereitstellen einer Begrenzung und Skalierung der durch die zwei parallelenArithmetik-Logikeinheiten (450a, 450b) verarbeiteten Datenworte gekoppelt ist.

3. Register- und Arithmetik-Logikeinheit nach Anspruch 2, wobei die Nachverarbeitungsmittel gekennzeichnet sind durch:
- einen FIFO-Puffer (456), der seriell mit der Begrenzer/Schiebe-Logikschaltung (454) zum Steuern der Länge der Pipeline der Register und Arithmetik-Logikeinheit (20a) und zum Bereitstellen einer Warteschlange der verarbeiteten Datenworte gekoppelt ist.

4. Register- und Arithmetik-Logikeinheit nach einem der Ansprüche 1 bis 3, gekennzeichnet durch:
- eine Begrenzer/Schiebe-Logikschaltung (454), die mit dem Datenausgang der Arithmetik-Logikmittel (450) gekoppelt ist und einen Ausgang hat, der mit einem Eingang der Registerdatei (444) gekoppelt ist; und
- einen FIFO-Puffer (456), der einen mit dem Ausgang der Begrenzer/Schiebe-Logikschaltung (454) gekoppelten Eingang und einen Ausgang hat, der den Ausgang der Register- undArithmetik-Logikeinheit (20a) umfaßt;
- wobei die Begrenzer/Schiebe-Logikschaltung (454) und der FIFO-Puffer (456) eine Begrenzung und Skalierung der durch die Arithmetik-Logikmittel (450) verarbeiteten Datenworte und eine Warteschlange für die verarbeiteten Datenworte bereitstellen.

5. Register- und Arithmetik-Logikeinheit nach einem der Ansprüche 1 bis 4, dadurch gekennzeichnet, daß jeder Eingang der Vielzahl von Dateneingängen der Arithmetik-Logikmittel (20a) mit jeweiligen der zwei parallelen Arithmetik-Logikeinheiten (450a, 450b) gekoppelt ist, um eine Vielzahl von vorbestimmten Datenverarbeitungsformaten verarbeiten zu können.

6. Register- und Arithmetik-Logikeinheit nach einem der Ansprüche 1 bis 5, dadurch gekennzeichnet, daß die Registerdatei (444) und die Festkomma-Arithmetik-Logikeinheit (450a) selektiv als ein Akkumulator konfiguriert sind.

7. Register- und Arithmetik-Logikeinheit nach einem der Ansprüche 1 bis 6, dadurch gekennzeichnet, daß die zwei parallelen Arithmetik-Logikeinheiten (450a, 450b) eine Verarbeitung der Daten in folgenden Verarbeitungsformaten gestatten: zweifach 16 Bit-Festkomma, 32 Bit-Festkomma, 32 Bit-Gleitkomma und ein logisches Verarbeitungsformat.

8. Register- und Arithmetik-Logikeinheit nach einem der Ansprüche 1 bis 7, dadurch gekennzeichnet, daß die Registerdatei (444) und die Festkomma-Arithmetik-Logikeinheit (450) als ein Akkumulator konfiguriert sind, um die Verarbeitung der Datenworte derart bereitzustellen, daß ein 32-Bit-Datenwort in ein 64-Bit-Datenwort, das zwei Registerdatei-Worte umfaßt, akkumuliert wird, oder die zweifachen 16-Bit-Worte in zwei 32-Bit-Datenworte akkumuliert werden.

## Revendications

1. Registre - unité arithmétique et logique comprenant
- un fichier de registre (444) possédant une pluralité d'entrées de données et une pluralité de sorties de données, et apte à mémoriser une pluralité de mots de données,
- des moyens arithmétiques et logiques (450) possédant une pluralité d'entrées couplées aux sorties de données du fichier de registre (444) et possédant une sortie de données, pour le traitement de mots de données au moyen de deux unités arithmétiques et logiques parallèles (450a, 450b) qui exécutent respectivement des opérations de traitement arithmétiques à virgule fixe et à virgule flottante; et
- des moyens logiques d'interface possédant une pluralité d'entrées de données (430,431,432) pour recevoir des mots de données devant être traités, et couplés aux entrées de données du fichier de registre (444) et aux moyens arithmétiques et logiques (450) pour transférer sélectivement des mots de données au fichier de registre (444) pour les y mémoriser ou transférer des mots de données dans les moyens arithmétiques et logiques (450) pour leur traitement par ces moyens.

2. Registre - unité arithmétique et logique selon la revendication 1, caractérisé par
- des moyens de post-traitement comprenant un circuit logique de limitation / décalage (454) couplé à la sortie de données des moyens arithmétiques et logiques (450) pour réaliser une limitation et un cadrage d'échelle des mots de données traités par les deux unités arithmétiques et logiques parallèles (450a, 450b).

3. Registre - unité arithmétique et logique selon la revendication 2, dans lequel les moyens de post-traitement sont caractérisés par :
- un tampon premier entré - premier sorti (456) couplé en série au circuit logique de limitation / décalage (454) pour commander la longueur du pipeline du registre - unité arithmétique et logique (20a) et pour former une file d'attente des mots de données traités.

4. Registre - unité arithmétique et logique selon l'une quelconque des revendications 1 - 3, caractérisé par :
- un circuit logique de limitation / décalage (454) couplé à la sortie de données des moyens arithmétiques et logiques (450) et possédant une sortie couplée à une entrée des moyens formant fichier de registre (444); et
- un tampon premier entré - premier sorti (456) possédant une entrée couplée à la sortie du circuit logique de limitation / décalage (454) et possédant une sortie comprenant la sortie du registre - unité arithmétique et logique (20a) ;
- le circuit logique de limitation / décalage (454) et le tampon premier entré - premier sorti (456) servant à réaliser la limitation et le cadrage d'échelle des mots de données traités par les moyens arithmétiques et logiques (450) et la mise en file d'attente des mots de données traités.

5. Registre - unité arithmétique et logique selon l'une quelconque des revendications 1 - 4, caractérisé en ce que chaque entrée de la pluralité d'entrées de données des moyens arithmétiques et logiques (20a) est couplée à une unité respective faisant partie des deux unités arithmétiques et logiques parallèles (450a, 450b) pour permettre le traitement d'une pluralité de formats de traitement de données prédéterminés.

6. Registre - unité arithmétique et logique selon l'une quelconque des revendications 1-5, caractérisé en ce que le fichier de registre (444) et l'unité arithmétique et logique à virgule fixe (450a) sont configurés sélectivement sous la forme d'un accumulateur.

7. Registre - unité arithmétique et logique selon l'une quelconque des revendications 1 - 6, caractérisé par le fait que les deux unités arithmétiques et logiques parallèles (450a, 450b) exécutent le traitement des données dans un format de traitement à 16 bits doubles à virgule fixe, à 32 bits à virgule fixe, à 32 bits à virgule flottante et dans un format de traitement logique.

8. Registre - unité arithmétique et logique selon l'une quelconque des revendications 1 - 7, caractérisé en ce que le fichier de registre (444) et l'unité arithmétique et logique à virgule fixe (450a) sont agencés sous la forme d'un accumulateur servant à réaliser le traitement des mots de données de telle sorte qu'un mot de données à 32 bits est cumulé dans un mot de données à 64 bits comprenant deux mots de fichier de registre, ou que les mots à 16 bits doubles sont cumulés sous la forme de deux mots de données à 32 bits.
